# EUROPÄISCHE PATENTSCHRIFT

(11) **EP 1 817 174 B1**
(45) Veröffentlichungstag und Bekanntmachung des Hinweises auf die Patenterteilung: **13.08.2008**
(21) Anmeldenummer: 05801643.7
(22) Anmeldetag: 14.10.2005
(51) Int. Cl.: B41M 5/26, C08K 5/00, C08K 9/04, C08K 3/32, C08K 5/3492

(54) **FORMMASSE FÜR DIE HERSTELLUNG SCHWER ENTFLAMMBARER GEGENSTÄNDE, PIGMENT HIERFÜR UND DESSEN VERWENDUNG**
MOULDED MASS FOR PRODUCING OBJECTS THAT ARE POORLY INFLAMMABLE, PIGMENT THEREFOR, AND USE OF THE SAME
MATIERE A MOULER POUR PRODUIRE DES OBJETS DIFFICILEMENT INFLAMMABLES, PIGMENT UTILISE A CETTE FIN ET UTILISATION DE CELLE-CI

(30) Priorität: 15.10.2004 DE 102004050478
(43) Veröffentlichungstag der Anmeldung: 15.08.2007
(73) Patentinhaber: Chemische Fabrik Budenheim KG, 55257 Budenheim (DE)
(72) Erfinder: FUTTERER, Thomas, 55218 Ingelheim (DE); NÄGERL, Hans-Dieter, 67373 Dudenhofen (DE); MANS FIBLA, Vincens, E-08915 Badalona (ES); WISSEMBORSKI, Rüdiger, 55435 Gau-Algesheim (DE)
(74) Vertreter: Seiffert, Klaus
(86) Internationale Anmeldenummer: PCT/EP2005/055285
(87) Internationale Veröffentlichungsnummer: WO 2006/042833

(56) Entgegenhaltungen:
- EP-A- 0 542 115
- EP-A- 0 764 683

## Beschreibung

Es ist bekannt, Kunststoffen flammhemmende Mittel in der Form feiner Teilchen zuzusetzen und diese feinen Teilchen in dem gesamten Kunststoffgegenstand oder in dessen Oberflächenbereichen zu dispergieren. Beispielsweise aus der DE-A-101 45 093 ist es bekannt, Polyphosphate organischer Stickstoffbasen, wie von Guanidin und Melamin oder Melaminderivaten als Flammschutzmittel in Kunststoffen und als Flammfestausrüstung von Textilien zu benutzen. Aus der WO 00/02869 sind Polyphosphatsalze insbesondere in glasfaserverstärkten Polyamiden und Polyestern als Flammschutzmittel bekannt. Andere organische Stickstoffbasen als Flammschutzmittel sind aus vielen weiteren Druckschriften bekannt, wobei die Tendenz der damit befaßten Industriezweige dahin geht, halogenfreie Flammschutzmittel, wie Aluminiumhydroxid, Magnesiumhydroxid oder Melamincyanurat zu diesem Zweck einzusetzen.

Wenn diese Flammschutzmittel in halogenfreien thermoplastischen Kunststoffen verteilt werden, kann ein nachteiliger Effekt darin bestehen, daß die Eigenschaften des Kunststoffes unerwünscht verändert werden.

Auf vielen Anwendungsgebieten ist es erwünscht, Kunststoffgegenstände, die flammfest gemacht wurden, mit Hilfe von Laserlicht beschreibbar oder markierbar zu machen, was in der Realität Schwierigkeiten ergab, insbesondere insofern, als halogenfreie Flammschutzmittel keinen ausreichenden Kontrast zeigten, so daß ihre Verwendung sich in der Praxis nicht als brauchbar erwies.

Die der Erfindung zugrundeliegende Aufgabe bestand somit darin, Kunststofformmassen zu bekommen, die Kunststoffgegenstände mit Laserbeschreibbarkeit ausstatten, ohne daß die Eigenschaften des Kunststoffes wesentlich verschlechtert werden. Die erfindungsgemäße Formmasse für die Herstellung schwer entflammbarer Gegenstände mit einer Matrix aus einem Thermoplasten und mit darin dispergiertem teilchenförmigem flammhemmendem Pigment ist dadurch gekennzeichnet, daß das Pigment unter dem Einfluß von Laserlicht seine Farbe oder die Farbe der Kunststoff-Matrix ändert und daß das Pigment ein Reaktionsprodukt wenigstens einer halogenfreien flammhemmenden organischen Stickstoffbase mit einem Salz oder Salzgemisch ist, die mit der organischen Stickstoffbase umsetzbar sind.

Als Matrixmaterial können alle bekannten Thermoplaste, gegebenenfalls glasfaserverstärkt, verwendet werden, die beispielsweise in Ullmanns Enzyklopädie der technischen Chemie (Band 15, Seite 457) beschrieben sind und die zum Teil für die Lasermarkierung auch bisher bereits verwendet wurden. Geeignete Kunststoffe sind z. B. Polyethylen, Polypropylen, Polyamid, Polyester, Polyphenylenoxid, Polyacetal, Polybutylenterephthalat, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polyethyletherketon, Polyvinylchlorid und thermoplastisches Polyurethan.

Als Polyester sind thermoplastische Polymere mit sich wiederholenden Estereinheiten in der Hauptkette bevorzugt. Beispiele sind Polykondensationsprodukte der Naphthalindicarbonsäuren, Terephthalsäure, Isophthalsäure, Adipinsäure, Azelainsäure, Sebacinsäure, Dodecandisäure und Cyclohexandicarbonsäure mit zweiwertigen Alkoholen wie Ethylenglykol, 1,3-Propandiol, 1,4-Butandiol, 1,4-Butendiol und 1,6-Hexandiol, 1,4-Hexandiol, 1,4-Cyclohexandiol, 1,4-Di-(hydroxymethyl)-cyclohexan, Bisphenol A, Neopentylglycol, Oligo- oder Polyethylenglykole, Oligo- oder Polypropylenglykole, Oligo- oder Poly-(tetramethylen)-glykole, Mischungen dieser Diole sowie esterbildenden Derivate derselben. Besonders bevorzugte Matrixkomponenten sind Polyethylenterephthalat, Polybutylenterephthalat und Polyether-esterblockcopolymere.

Als Polyamide kommen thermoplastische Polymere mit sich wiederholenden Säureamidgruppen in der Hauptkette in Betracht, und zwar Homopolymere wie auch Copolymere mit weiteren Comonomergruppen.

Beispiele hierfür sind Polyhexamethylenadipinsäureamid, Polyhexamethylenazelainsäureamid, Polyhexamethylensebacinsäureamid, Polyhexamethylendodekandisäureamid, Poly-11-aminoundekansäureamid und Bis-(p-amino-cyclohexyl)-methandodekansäureamid oder die durch Ringöffnung von Lactamen, z. B. Polycaprolactam oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Thermoplastische Polymere als Gemischpartner für das Matrixmaterial können beliebige teilkristalline, flüssigkristalline und amorphe Polymere sein.

Polyurethan ist aufgrund seiner hochwertigen mechanischen Eigenschaften und der kostengünstigen Verarbeitungsmethoden besonders geeignet. Thermoplastische Polyurethane sind seit langem aus zahlreichen Literaturveröffentlichungen und Patentschriften bekannt.

Es ist äußerst überraschend, daß die Salzkomponenten einerseits eine Verbesserung des Kontrasts bei der Laserbeschriftbarkeit oder -markierbarkeit und andererseits gleichzeitig eine Verbesserung der Flammschutzeigenschaft ergeben.

Die erfindungsgemäßen Effekte der oben geschilderten Art werden durch das Pigment erhalten, welches einerseits flammhemmende Eigenschaften hat und andererseits durch Absorption von Laserlicht die Laserbeschreibbarkeit ergibt. Dieses Pigment ist ein Reaktionsprodukt wenigstens einer halogenfreien flammhemmenden organischen Stickstoffbase mit einem reaktionsfähigen Salz oder Salzgemisch, das mit der Stickstoffbase reagieren kann. Die organische Stickstoffbase ist zweckmäßig Melamin oder ein Melaminderivat, wie Melamincyanurat, Melaminorthophosphat, Dimelaminorthophosphat, Melaminpyrrophosphat, Melaminpolyphosphat, Melaminborat, Melaminsalz von Teilphosphorsäureester, ein Salz oder mehrere der Phosphoroxyverbindungen, Ammoniumpolyphosphat, Borphosphat und Kombinationen hiervon. Die verwendeten Flammschutzmittel können auch in Triazin-Polymeren, Melern, Melam, Harnstoff, Guanidin usw. verwendet werden.

Unter einem Salz versteht man hier im Sinne der Erfindung Verbindungen, die in Wasser wenigstens teilweise in Kationen und Anionen dissoziieren bzw. aus einem Säurerest und einem Basenrest bestehen.

Wenn andererseits hier von einer Farbveränderung die Rede ist, kann diese ein Umschlagen von einem Farbton in einen anderen, wie beispielsweise von Gelb nach Rot oder von Transparent nach Schwarz sein. Im Sinne der Erfindung soll unter diesem Begriff aber auch eine Helligkeitsveränderung, beispielsweise von Hellbraun nach Dunkelbraun und auch eine Farbveränderung in der Kunststoff-Matrix verstanden werden.

Der Begriff "teilchenförmig" soll bedeuten, daß das Pigment in Form feiner fester Teilchen vorliegt, wobei sich quantitative Angaben auf die mittlere Teilchengröße (d₅₀) und auf die Teilchengröße der Primärteilchen beziehen. Die Größe der Primärteilchen liegt im Nanometer- bis Mikrometerbereich. Geeignete Primärteilchen haben mittlere Teilchengröße (d₅₀) kleiner als 10 µm, vorzugsweise kleiner als 5 µm.

Die Pigmente nach der Erfindung können, ohne den Erfindungsgedanken zu verlassen, zusätzlich weitere Kationen, insbesondere solche von Elementen der 2. bis 5. Periode der 1. Hauptgruppe enthalten. Auch ist es möglich, den Pigmenten zusätzlich anorganische Oxide und/oder weitere farbgebende Additive und/oder übliche, bestimmte Eigenschaften modifizierende Additive zuzusetzen, wie UV-Stabilisatoren, Stabilisatoren gegen Verwitterung, zur Verbesserung der hydrolytischen und azidolytischen Beständigkeit, Gleitmittel, Entformungshilfen, Nukleierungsmittel, Füllstoffe, Weichmacher und andere Zusatzstoffe.

Die Auswahl der Salze erfolgt in der Regel so, daß diese im Wellenlängenbereich des zur Verfügung stehenden Laserlichts eine möglichst starke Absorption aufweisen.

Die Wellenlängenbereiche des eingesetzten Laserlichts sind keinen Beschränkungen unterworfen. Geeignete Laser haben beispielsweise eine Wellenlänge im Bereich von 157 nm bis 10,6 mm. Beispielsweise seien hier CO₂-Laser (10,6 mm) und Nd:YAG-Laser (1064 nm) oder gepulste UV-Laser erwähnt.

Typische Excimerlaser weisen folgende Wellenlänge auf: F₂-Excimerlaser (157 nm), ArF-Excimerlaser (193 nm), XeCl-Excimerlaser (308 nm), XeF-Excimerlaser (351 nm), frequenzvervielfachte Nd:YAG-Laser mit Wellenlängen von 532 nm (Frequenz verdoppelt) von 355 nm (Frequenz verdreifacht) oder 265 nm (Frequenz vervierfacht). Besonders bevorzugt sind Nd:YAG-Laser (1064 bzw. 532 nm) und CO₂-Laser eingesetzt. Die Energiedichten der erfindungsgemäß eingesetzten Laser liegen im allgemeinen im Bereich von 0,3 mJ/cm² bis 50 J/cm², vorzugsweise 0,3 mJ/cm² bis 10 J/cm². Bei der Verwendung von gepulsten Lasern liegt die Pulsfrequenz im allgemeinen im Bereich von 1 bis 30 kHz.

Pigmente im Sinne dieser Beschreibung sind organische oder anorganische salzartige Verbindungen oder Mischungen salzartiger Verbindungen, die unter dem Einfluß einer Laserlichtquelle an der belichteten Stelle ihre Farbe ändern.

Diese Verbindungen können klassische Salze mit definierter Stöchiometrie aus einem oder mehreren Anionen mit von einem oder mehreren Elementen abgeleiteten Kationen sein, es kann sich aber auch um nicht stöchiometrisch zusammengesetzte Verbindungen handeln. Anionen der organischen Carbonsäuren sowie der Kohlensäure sind bevorzugt.

Die Anionen unterliegen keinen Beschränkungen, doch sind Anionen der organischen Carbonsäuren sowie Oxoanionen, mit Ausnahme von Phosphinaten und Diphosphinaten und/oder deren Polymeren und/oder Anionen der Kohlensäure.

Bevorzugt sind solche Kombinationen, bei denen die unbelichtete Verbindung im Bereich der verwendeten Lichtwellenlänge absorbiert.

Bevorzugt sind weiterhin solche Kombinationen, bei denen durch Variation der Molverhältnisse der Kationen die Eigenfarbe der unbelichteten Verbindung eingestellt werden kann.

In einer bevorzugten Ausführungsform der Erfindung weist die unbelichtete Verbindung eine möglichst hohe Helligkeit und eine möglichst geringe Eigenfarbe auf. In diesem Fall soll die belichtete Verbindung eine möglichst geringe Helligkeit und dennoch eine möglichst geringe Eigenfarbe haben.

In einer anderen bevorzugten Ausführungsform der Erfindung soll die unbelichtete Komponente eine möglichst hohe Helligkeit und eine möglichst geringe Eigenfarbe haben, die belichtete Komponente dagegen eine möglichst deutliche Eigenfarbe.

In einer bevorzugten Ausführungsform der erfindungsgemäßen Zusammensetzung weisen die Anionen der obigen Komponente die allgemeine Formel AₐOₒ(OH)_{y}^{z-} auf, worin
A = drei- oder fünfwertiger Phosphor, vierwertiges Molybdän oder sechswertiges Wolfram bedeuten,
a, o und z unabhängig voneinander ganze Zahlen mit Werten von 1 - 20 bedeuten, und
y eine ganze Zahl mit Werten zwischen 0 - 10 ist.

In einer weiteren bevorzugten Ausführungsform der erfindungsgemäßen Zusammensetzung weist das Pigment mindestens eine Kombination aus zwei unterschiedlichen Elementen der Gruppe bestehend aus Kupfer, Zinn, Antimon und Eisen auf.

In einer besonders bevorzugten Ausführungsform der erfindungsgemäßen Zusammensetzung weist das Pigment Anionen der Phosphor(V)- und/oder Phosphor(III)-säure, deren Kondensationsprodukte oder gegebenenfalls mit weiteren Hydroxidionen und als Kationen Cu und Fe oder Cu und Sn oder Cu und Sb oder Sn und Fe auf.

Bevorzugt werden Metallsalze verwendet, die eine besonders hohe thermische Stabilität besitzen, so daß anhand der Einarbeitung des durch Dotierung hergestellten Kombinationsprodukts in das Polymer keine Zersetzung stattfindet. Verwendet werden Salze oder Liganden mit einer thermischen Stabilität von über 200 °C (2 % Gew.-Verlust), bevorzugt mit einer Stabilität von über 250 °C (2 % Gew.-% Verlust), besonders bevorzugt mit einer Stabilität von über 300 °C (2 % Gew.-Verlust).

Lichtintensive Flammschutzmittelkombinationen werden durch Dotierung, Reaktion und Vermischen der organischen Stickstoffbasen mit den Metallverbindungen erhalten. Unter Dotieren versteht man sowohl die Herstellung von Mischungen einer oder mehrerer der genannten festen Bestandteile im pulverförmigen Zustand wie auch das Vermischen einer oder mehrerer der erwähnten festen Bestandteile in gelöster oder suspendierter Form mit anschließendem Trocknen des pulverförmigen Produktes.

Die erfindungsgemäßen Produkte haben alle sowohl flammhemmende als auch laserbeschriftbare Eigenschaften.

Die Erfindung betrifft auch die Pigmente für die Herstellung gleichzeitig flammhemmender und laserbeschriftbarer Kunststoffgegenstände mit den oben für die Formmassen angegebenen Merkmalen. Gleichermaßen betrifft die Erfindung die Verwendung von Pigmenten mit den angegebenen Merkmalen zur Herstellung flammhemmender und gleichzeitig laserbeschriftbarer Kunststoffgegenstände, insbesondere solcher aus Thermoplasten.

### Beispiel 1

### Pigment für eine erfindungsgemäße Formmasse wurde wie folgt hergestellt:

Kupferhydroxid (1 mol) und Isocyanursäure (1 mol) werden in einem Mischer mit Wasser vorgelegt und unter Rühren vermengt. Dabei findet eine Neutralisationsreaktion mit Salzbildung statt. Nach 30 min werden Melamin (10 mol) und Cyanursäure (10 mol) im exakten Verhältnis 1:1 hinzugefügt. Die gesamte Mischung wird 1 h gerührt und anschließend bei 110 °C unter Vakuum getrocknet.

Mit der folgenden Rezeptur wurde aus dem erhaltenen Pigment eine Formmasse nach der Erfindung erhalten. Für diese wurden die Flammbeständigkeit und Laserbeschriftbarkeit bestimmt.

Als Laser wurde ein im Handel üblicher Nd-YAG-Laser (Wellenlänge 1064 nm) verwendet. Die Kontrastwerte wurden mit Hilfe einer auf einem Mikroskop montierten Digitalkamera und einer Bildauswertungssoftware ermittelt. Die Flammbeständigkeit wurde mit Hilfe einer UL-Box nach UL 94 ermittelt. Die CTI-Werte wurden entsprechend der DIN IEC 60112/VDE 0303 Teil 1, RAL 7035 überprüft.

| | |
|---|---|
| Polyamid 6,6/6 (Molverhältnis 1:1) | 88 Gew.-% |
| | |
| Melamincyanurat (wie oben hergestellt) | 12 Gew.-% |
| | |
| UL94 | VO |
| | |
| Kontrast (K-Wert) | 4,2 |
| | |
| CTI | 520 |

Die dabei aus den thermoplastischen Formmassen erhaltenen Gegenstände zeichnen sich sowohl durch ihre ausgezeichnete Flammbeständigkeit (selbstverlöschend) als auch durch hohe Kontrastwerte (K-Wert) bei der Laserbeschriftung aus.

### Beispiel 2

### Pigment für eine erfindungsgemäße Formmasse wurde wie folgt hergestellt:

Ein 50 I Reaktor mit Rührwerk wird mit 29,25 I reinem Wasser gefüllt. Orthophosphorsäure (74,75 mol) wird unter Rühren bei Raumtemperatur zugesetzt. Wegen der exothermen Reaktion steigt die Temperatur im Reaktorinhalt an und wird bei 50 °C für 10 min gehalten. Anschließend wird unter Rühren langsam Melamin (74,75 mol) zugegeben und ein Verklumpen verhindert. Nachdem eine homogene Suspension erhalten wurde, wird zu der Mischung Kupferhydroxid (7,47 mol) zugegeben. Die gesamte Mischung wird 1 h bei 100°C gerührt, anschließend die Temperatur angehoben und unter Vakuum getrocknet.

Das so gewonnene dotierte Melaminorthophosphat wurde in einem Ofen bei 340°C zu Melaminpolyphosphat umgesetzt. Das Produkt wurde anschließend auf eine Feinheit von 5 Micron vermahlen.

| | |
|---|---|
| Polyamid | 50 Gew.-% |
| Glasfasern | 30 Gew.-% |
| Melamincyanurat | 10 Gew.-% |
| Melaminpolyphosphat (wie oben hergestellt) | 10 Gew.-% |
| UL94 | VO |
| Kontrast (K-Wert) | 2,8 |
| CTI | 590 V |

Auch diese Formmasse ergab ausgezeichnete Flammbeständigkeit und Laserbeschriftbarkeit (K-Wert).

## Patentansprüche

1. Formmasse für die Herstellung schwer entflammbarer Gegenstände mit einer Matrix aus einem Thermoplasten und mit darin dispergiertem teilchenförmigem flammhemmendem Pigment, **dadurch gekennzeichnet, daß** das Pigment unter dem Einfluß von Laserlicht seine Farbe oder die Farbe der Kunststoff-Matrix ändert und daß das Pigment ein Reaktionsprodukt wenigstens einer halogenfreien flammhemmenden organischen Stickstoffbase mit einem Salz oder Salzgemisch ist, die mit der organischen Stickstoffbase umsetzbar sind.

2. Formmasse nach Anspruch 1, **dadurch gekennzeichnet, daß** ihr Pigment eine mittlere Teilchengröße (d₅₀) kleiner als 10 µm, vorzugsweise kleiner als 5 µm hat.

3. Formmasse nach einem der Ansprüche 1 und 2, **dadurch gekennzeichnet, daß** ihr Pigment salzartige Verbindungen mit Oxoanionen mit Ausnahme von Phosphinaten und Diphosphinaten und/oder deren Polymeren, Anionen von organischen Carbonsäuren oder Anionen der Kohlensäure als Anionen enthält.

4. Formmasse nach Anspruch 3, **dadurch gekennzeichnet, daß** ihr Pigment als Anionen phosphorhaltige Oxoanionen, insbesondere Phosphat-, kondensierte Phosphat-, Phosphonat-, Phosphit- und gemischte Hydroxid-Phosphat-Oxoanionen und/oder Cyanurat-Anionen enthält.

5. Formmasse nach einem der Ansprüche 1 bis 4, **dadurch gekennzeichnet, daß** die Anionen des Pigmentes die allgemeine Formel AₐOₒ(OH)_{y}^{z-} besitzen, worin A drei- oder fünfwertigen Phosphor, vierwertiges Molybdän oder sechswertiges Wolfram bedeuten, a, o und z unabhängig voneinander ganze Zahlen im Bereich von 1 bis 20 bedeuten und y eine ganze Zahl zwischen 0 und 10 ist.

6. Formmasse nach einem der Ansprüche 1 bis 5, **dadurch gekennzeichnet, daß** die Kationen ihres Pigments aus Kupfer, Zinn, Antimon, Eisen und/oder Bor bestehen.

7. Formmasse nach einem der Ansprüche 1 bis 6, **dadurch gekennzeichnet, daß** die Anionen der Salze aus Phosphor(V)-Säure und/oder Phosphor(III)-Säure oder deren Kondensationsprodukten, gegebenenfalls mit weiteren Hydroxylionen, und die Kationen aus Cu und Fe oder Cu und Sn oder Cu und Sb oder Sn und Fe bestehen.

8. Formmasse nach einem der Ansprüche 1 bis 7, **dadurch gekennzeichnet, daß** die Salze des Pigments so ausgewählt sind, daß das unbelichtete Pigment im Bereich der zu verwendenden Lichtwellenlänge absorbiert.

9. Formmasse nach einem der Ansprüche 1 bis 8, **dadurch gekennzeichnet, daß** ihre thermoplastische Matrix aus, gegebenenfalls glasfaserverstärktem, Polypropylen, Polyethylen, Polyamid, Polybutylenterephthalat, Polyethylenterephthalat, Polyester, Polyphenylenoxid, Polyacetal, Polymethacrylat, Polyoxymethylen, Polyvinylacetal, Polystyrol, Acryl-Butadien-Styrol (ABS), Acrylnitril-Styrol-Acrylester (ASA), Polycarbonat, Polyethersulfon, Polyetherketon, Polyvinylchlorid, thermoplastischem Polyurethan und/oder deren Copolymeren und/oder Mischungen besteht.

10. Formmasse nach einem der Ansprüche 1 bis 9, **dadurch gekennzeichnet, daß** die halogenfreie organische Stickstoffbase Melamin, Melamincyanurat, Melaminorthophosphat, Dimelaminorthophosphat, Melaminpyrrophosphat, Melaminpolyphosphat, Melaminborat, Melaminsalz von Phosphorsäureteilestern, weitere Salze der III- und V-wertigen Phosphoroxyverbindungen, Ammoniumpolyphosphat, Borphosphat und/oder Gemische hiervon sowie gegebenenfalls im Gemisch mit Synergisten, wie Pentaerythrit, Dipentaerythrit, THEIC, Triacinpolymeren, Harnstoff, Guanidin, Melem, Melam, oder Salze von Phosphonsäuren umfaßt.

11. Verwendung eines Pigments nach einem der Ansprüche 1 bis 10 zur Herstellung schwer entflammbarer und laserbeschriftbarer Kunststoffgegenstände, insbesondere solcher aus Thermoplasten.

12. Pigment nach einem der Ansprüche 1 bis 10 für die Herstellung gleichzeitig schwer entflammbarer und laserbeschriftbarer Kunststoffgegenstände.

## Claims

1. A moulding material for the production of highly flame resistant articles with a matrix formed from a thermoplastic and with a particulate flame retardant pigment dispersed therein, **characterized in that** under the influence of laser light the pigment changes colour or the colour of the plastic matrix changes, and **in that** the pigment is a reaction product of at least one halogen-free flame retardant organic nitrogen base with a salt or a salt mixture which can be reacted with the organic nitrogen base.

2. A moulding material according to claim 1, **characterized in that** its pigment has a mean particle size (d₅₀) of less than 10 µm, preferably less than 5 µm.

3. A moulding material according to claim 1 or claim 2, **characterized in that** its pigment contains salt type compounds with oxoanions with the exception of phosphinates and diphosphinates and/or polymers thereof, anions of organic carboxylic acids or anions of carbonic acid.

4. A moulding material according to claim 3, **characterized in that** its pigment contains, as the anions, phosphorus-containing oxoanions, in particular phosphate-, condensed phosphate-, phosphonate-, phosphite- and mixed hydroxide-phosphate-oxoanions and/or cyanurate anions.

5. A moulding material according to one of claims 1 to 4, **characterized in that** the anions of the pigment have general formula AₐOₒ(OH)_{y}²⁻, wherein A represents tri- or penta-valent phosphorus, tetra-valent molybdenum or hexa-valent tungsten, a, o and z independently represent whole numbers in the range 1 to 20 and y represents a whole number between 0 and 10.

6. A moulding material according to one of claims 1 to 5, **characterized in that** the cations of its pigment consists of copper, tin, antimony, iron and/or boron.

7. A moulding material according to one of claims 1 to 6, **characterized in that** the anions of the salts consist of phosphorus (V) acid and/or phosphorus (III) acid or condensation products thereof, if appropriate with further hydroxyl ions, and the cations consist of Cu and Fe or Cu and Sn or Cu and Sb or Sn and Fe.

8. A pigment according to one of claims 1 to 7, **characterized in that** the salts are selected so that the non-illuminated pigment absorbs in the region of the wavelength of the light to be used.

9. A moulding material according to one of claims 1 to 8, **characterized in that** its thermoplastic matrix consists of optionally glass fibre-reinforced polypropylene, polyethylene, polyamide, polybutylene terephthalate, polyethylene terephthalate, polyester, polyphenylene oxide, polyacetal, polymethacrylate, polyoxymethylene, polyvinylacetal, polystyrene, acrylic-butadiene-styrene (ABS), acrylonitrile-styrene-acrylic ester (ASA), polycarbonate, polyether sulphone, polyether ketone, polyvinylchloride, thermoplastic polyurethane and/or copolymers thereof and/or mixtures thereof.

10. A moulding material according to one of claims 1 to 9, **characterized in that** the halogen-free organic nitrogen base consists of melamine, melamine cyanurate, melamine orthophosphate, dimelamine orthophosphate, melamine pyrophosphate, melamine polyphosphate, melamine borate, a melamine salt of a phosphorus acid partial ester, further salts of III- and V-valent phosphoroxy compounds, ammonium polyphosphate, boron phosphate and/or mixtures thereof as well as mixtures thereof with synergistic agents such as pentaerythritol, dipentaerythritol, THEIC, triacin polymers, urea, guanidine, melem or melam, or phosphonic acid salts.

11. Use of a pigment according to one of claims 1 to 10, for the production of highly flame resistant and laser-writable plastic articles, in particular those formed from thermoplastics.

12. Pigment according to one of claims I to 10, for the production of simultaneously highly flame resistant and laser-writable plastic articles.

## Revendications

1. Matière à mouler destinée à fabriquer des objets difficilement inflammables comprenant une matrice en thermoplastique dans laquelle est dispersé un pigment particulaire ignifuge, **caractérisée en ce que** le pigment modifie sa couleur ou la couleur de la matrice en matière plastique sous l'influence d'une lumière à laser et **en ce que** le pigment est un produit de réaction d'au moins une base azotée organique ignifuge exempte d'halogène avec un sel ou un mélange de sels pouvant entrer en réaction avec la base azotée organique.

2. Matière à mouler selon la revendication 1, **caractérisée en ce qu'**une taille moyenne des particules (d₅₀) du pigment est inférieure à 10 µm, de préférence inférieure à 5 µm.

3. Matière à mouler selon l'une quelconque des revendications 1 et 2, **caractérisée en ce que** son pigment contient des combinaisons salines avec des oxyanions sauf du phosphinate et du disphosphinate et/ou leurs polymères, des anions d'acide carboxylique organique ou anions de dioxyde de carbone en tant qu'anions.

4. Matière à mouler selon la revendication 3, **caractérisée en ce que** son pigment en tant qu'anions contient des oxyanions phosphorés, en particulier des oxyanions de phosphate, de phosphate condensé, de phosphonate, de phosphite et des oxyanions de phosphate et d'hydroxyde mélangés et/ou des anions de cyanurate.

5. Matière à mouler selon l'une quelconque des revendications 1 à 4, **caractérisée en ce que** les anions du pigment possèdent la formule générale AₐOₒ(OH)y^{z-}, dans laquelle A correspond à du phosphore pentavalent ou trivalent, du molybdène tétravalent ou du tungstène hexavalent, a, o et z correspondent indépendamment des uns des autres à des chiffres entiers compris entre 1 et 20 et y est un chiffre entier entre 0 et 10.

6. Matière à mouler selon l'une des revendications 1 à 5, **caractérisée en ce que** les cations de son pigment sont constitués de cuivre, d'étain, d'antimoine, de fer et/ou de bore.

7. Matière à mouler selon l'une quelconque des revendications 1 à 6, **caractérisée en ce que** les anions des sels se composent d'acide phosphorique (V) et/ou d'acide phosphorique (III) ou de leurs produits de condensation, si nécessaire avec d'autres ions d'hydroxyle, et les cations se composent de Cu et Fe ou Cu et Sn ou Cu et Sb ou Sn et Fe.

8. Matière à mouler selon l'une quelconque des revendications 1 à 7, **caractérisée en ce que** les sels du pigment sont sélectionnés de telle sorte que le pigment non exposé absorbe dans la région de la longueur des ondes lumineuses devant être utilisées.

9. Matière à mouler selon l'une quelconque des revendications 1 à 8, **caractérisée en ce que** sa matrice thermoplastique se compose de polypropylène, polyéthylène, polyamide, polybutylène-téréphtalate, polyéthylènetéréphtalate, polyester, oxyde de polyphénylène, polyacétal, polyméthacrylate, polyoxyméthylène, Polyvinylacétal, polystyrène, acrylonitrile-butadiène-styrène (ABS), acrylonitrile-styrène-acrylester (ASA), polycarbonate, polyéthersulfone, polyéthercétone, chlorure de polyvinyle, polyuréthane thermoplastique et/ou de leurs copolymères et/ou des mélanges, renforcés par des fibres de verre, si nécessaire.

10. Matière à mouler selon l'une quelconque des revendications 1 à 9, **caractérisée en ce que** la base azotée organique exempte d'halogène comprend : mélamine, mélamine-cyanurate, orthophosphate de mélamine, orthophosphate de dimélamine, pyrophosphate de mélamine, polyphosphate de mélamine, borate de mélamine, sel de mélamine d'ester partiel d'acide phosphorique, autres sels des combinaisons d'oxyde phosphorique trivalentes ou pentavalentes, polyphosphate d'ammonium, borophosphate et/ou des mélanges de ceux-ci ainsi que si nécessaire mélangés à des synergistes tels que : pentaérythrite, dipentaérythrite, THEIC, triacinpolymères, urée, guanidine, mélème, mélame, ou sels d'acide phosphorique.

11. Utilisation d'un pigment selon l'une quelconque des revendications 1 à 10 pour la fabrication d'objets en matière plastique difficilement inflammables et pouvant être marqués au laser, en particulier des objets en thermoplastique.

12. Pigment selon l'une quelconque des revendications 1 à 10 pour la fabrication d'objets en matière plastique tant difficilement inflammables que pouvant être marqués au laser.
